# EUROPEAN PATENT SPECIFICATION

(11) **EP 4 110 600 B1**
(45) Date of publication and mention of the grant of the patent: **06.03.2024**
(21) Application number: 21706386.6
(22) Date of filing: 18.01.2021
(51) Int. Cl.: B29D 30/06

(54) **MOULD FOR VULCANISING TYRES FOR VEHICLES**
FORM ZUM VULKANISIEREN VON REIFEN FÜR FAHRZEUGE
MOULE DE VULCANISATION DE PNEUMATIQUES POUR VÉHICULES

(30) Priority: 25.02.2020 IT 202000003847
(43) Date of publication of application: 04.01.2023
(73) Proprietor: Prometeon Tyre Group S.r.l., 20126 Milano (IT)
(72) Inventor: LODI, Bruno, 09530-460 Sao Caetano do Sul (BR); PALERMO, Fernando Bueno, 09060-480 Santo Andre' (BR)
(74) Representative: Tansini, Elio Fabrizio
(86) International application number: PCT/IB2021/050339
(87) International publication number: WO 2021/171104

(56) References cited:
- EP-A2- 1 106 392
- US-A1- 2019 176 367

## Description

The present invention relates to a mould for vulcanising tyres for vehicles. In particular, the invention is conveniently usable for making tyres for vehicles mainly used in farming or other uses where operation is typically required on loose terrain.

A tyre for vehicles generally comprises a carcass structure having one or more carcass plies composed of reinforcement cords incorporated in elastomeric matrix, having axially opposite end flaps turned up around respective annular reinforcement structures. Each annular reinforcement structure generally comprises at least one metallic bead core coupled to a respective filler made of elastomeric material, positioned in radially outer position with respect to the bead core. The annular reinforcement structures are enclosed in the aforesaid end flaps, turned up like a flipper around the annular structures themselves in the radially inner zones of the tyre normally identified with the name "beads".

Around the carcass structure, in radially outer position, a belt structure can be applied that is formed by one or more belt layers, each comprising respectively parallel cords, extended according to a cross progression with respect to the cords belonging to the adjacent belt layer or layers.

In radially outer position with respect to the belt structure, a tread band is applied, through which the contact between the tyre and the ground occurs during use.

A pair of sidewalls covers the external surfaces of the carcass structure, each in the space comprised between the respective bead and an axially outer edge of the tread band.

In the tyres for uses on loose terrain, towards which the present invention is particularly directed, the cords of the carcass structure can be made of textile or metallic material, such as those of the possible belt layers. The tread band has a so-called "tread design" typically characterized by the presence of large ribs intercalated with wide slots with high depth. The ribs are extended according to a direction that is transverse or tilted with respect to a circumferential direction, each starting from a central zone of the tread band up to in proximity to the external edges of the same, according to a progression that is respectively diverging starting from an intermediate reference plane, typically arranged on the axial middle line of the tyre. Normally, the ribs arranged on one side and on the other with respect to the intermediate reference plane respectively result offset along a circumferential direction.

The size and shape of the ribs can vary depending on the requirements. For example, tread designs are known in which each of the ribs has a main section extended from the axially outer edge of the tread band and joined, in proximity to the intermediate reference plane, with an axially inner terminal portion, according to a direction that is tilted with respect to the latter to form a cusp with vertex directed according to a circumferential direction.

Such ribs are formed by a moulding and vulcanisation step in which the green tyre, previously built by assembly of the respective components, is inserted in a mould normally composed of two half-parts which can be axially fit against each other up to mating according to a circumferential junction line coplanar with the intermediate reference plane, so as to close the tyre being processed in a moulding cavity delimited by an internal wall that is counter-shaped with respect to the geometric conformation to be confirmed to the tyre itself.

A typical two half-parts tyre mould according to the prior art is disclosed in EP 1 106 392 A2.

The green tyre closed in the mould is pressed against the internal walls of the moulding cavity so as to form the aforesaid ribs, simultaneously with the administration of heat in order to determine the chemical cross-linking of the elastomeric material and the consequent structural stabilization of the moulded tyre.

Upon completed vulcanisation, the half-parts of the mould are mutually moved apart in order to allow the removal of the moulded and vulcanised tyre.

The applicant has nevertheless found that the execution of the moulding and vulcanisation described above can determine, above all with tread designs of a certain type, a rather high incidence of defects in the obtained products. In particular, the applicant has observed that, in some cases, surface or structural defects are produced on the ribs formed on the tread band.

According to the applicant, one of the main causes of such surface defects derives from the stresses transmitted to the tyre during the opening of the mould. The applicant has in fact observed that, for the purposes of opening the mould, the elastic deformability of the vulcanised tyre is exploited, such tyre still hot due to the vulcanisation, in order to allow the forced moving apart of the half-parts, requiring a centripetal deformation for the tyre itself, such to allow the rigid parts of the mould to go beyond the undercuts defined by the ribs formed on the tread band following the process of moulding and vulcanisation.

This forced moving apart can nevertheless cause localised over-stresses in some points of the ribs, causing deformations or permanent damage, also following the undesired removal of material from several zones of the tread design.

For example, in the aforesaid tread designs in which the ribs form cusps, defects can be found due to the lack of material in proximity to the radially inner ends of the single ribs.

The applicant has therefore perceived that an optimisation of the loads set on the single parts of the tyre during the opening of the mould can determine the attainment of significant quality improvements.

On such matter, it was found that the loads transmitted to the tyre in the mould opening steps can be conveniently modulated by employing a suitable configuration for the mutual junction line between the half-parts of the mould in proximity to the intermediate reference plane.

More particularly, forming the object of the present invention is a mould for vulcanising tyres for vehicles, according to claim 1.

The applicant deems that the coupling of the half-parts of the mould according to a junction line with undulated profile allows an improved distribution of the loads transmitted to the tyre during the forced moving apart of the half-parts during the mould opening. In particular, since the junction line of the half-parts at each crest intersects the axially inner terminal portion of the respective slot, an excessive concentration of the stresses at the axially inner terminal portions of the formed ribs can be conveniently prevented, in the tread band of the tyre, at the axially inner portions of the slots. According to the applicant, this technical expedient can be particularly advantageous for the purpose of optimisation of the stresses in tread designs in which the axially inner terminal portions of the ribs form cusps or similar undercuts.

In at least one embodiment, the invention also comprises one or more of the following preferred characteristics.

Preferably, the junction line has connection sections, each of which extended on the continuation of two contiguous crests, traversing the intermediate reference plane between two circumferentially adjacent slots, respectively belonging to the first and second series.

Preferably, each slot has a main section extended from the axially outer terminal portion and joined with the axially inner terminal portion, according to a direction that is tilted with respect to the latter.

Preferably, the main section and the axially inner terminal portion form a cusp having a vertex directed according to a circumferential direction. Preferably, each crest of the junction line intersects the respective slot at the cusp.

Preferably, the crest of the junction line is extended along a bisector direction which symmetrically intersects the vertex of the cusp.

Preferably, the axially inner terminal portion of each slot is situated on the half-part of the mould opposite the half-part carrying the main section and the axially outer terminal portion of the same slot.

Preferably, the main section of each slot is extended obliquely with respect to the reference plane.

Preferably, the crests and the connection sections of the junction line each have a rectilinear extension.

Preferably, the crests and the connection sections of the junction line follow each other according to a polygonal chain progression.

Preferably, the crests and the connection sections of the junction line each have a curvilinear progression.

Preferably, the crests and the connection sections of the junction line are mutually connected according to a sinusoidal progression.

Preferably, the intermediate reference plane coincides with an axial middle line of the moulding cavity.

Preferably, in each slot, a distance of the intermediate reference plane from the axially outer terminal portion is greater than the distance of the intermediate reference plane from the axially inner terminal portion. Further characteristics and advantages of the present invention will be clearer from the detailed description of a preferred but not exclusive embodiment of a mould for vulcanising tyres for vehicles, in particular for operating on fairly loose terrain, in accordance with the present invention.

Such description will be set forth hereinbelow with reference to the enclosed drawings, provided only as a non-limiting example in which:
- figure 1 shows, in partially perspective sectional view, a tyre obtainable by the present mould;
- figure 2 schematically shows, in cross section, the vulcanisation mould installed in a vulcanisation press, and arranged in open condition;

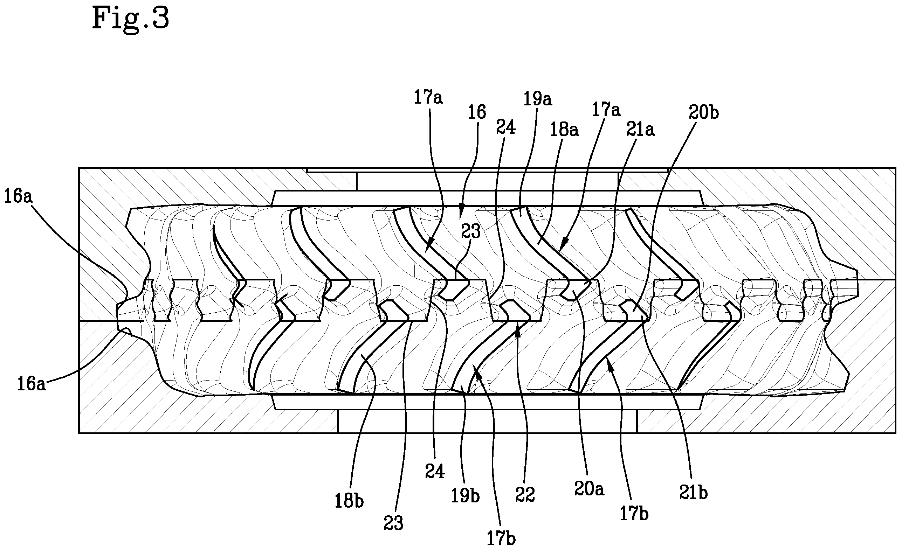

- figure 3 shows the mould of figure 2 in closed condition;
- figure 4 shows an enlarged detail of the mould with the half-parts side-by-side in closed condition;
- figure 5 shows the detail of figure 4 in a possible embodiment variant of the invention.

With reference to the abovementioned figures, reference number 1 overall indicates a mould for vulcanising tyres for vehicles.

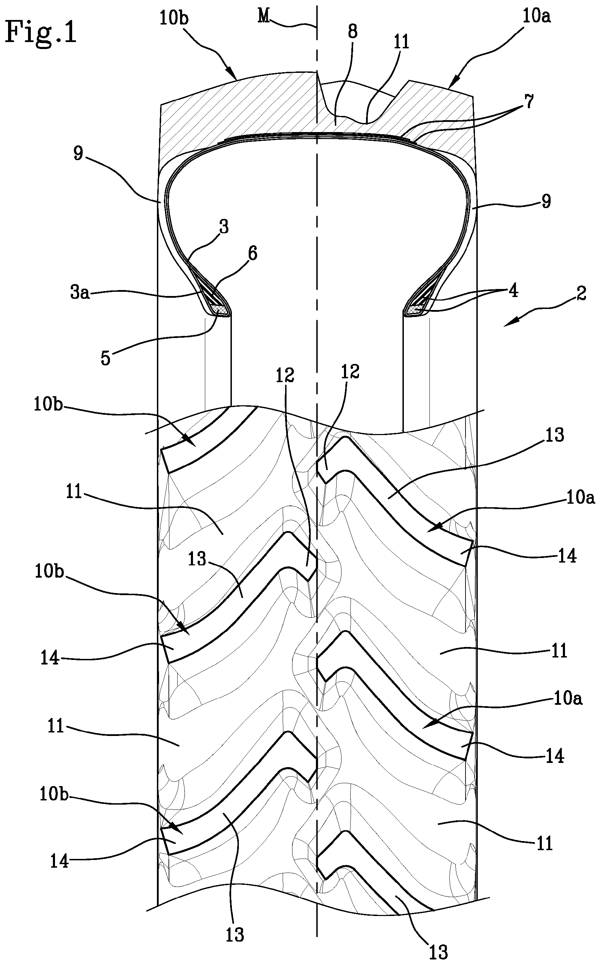

The mould 1 is particularly aimed for making tyres of the type exemplified in figure 1 and overall indicated with 2, comprising one or more carcass plies 3 having preferably cords made of metallic material or possibly textile material. Two anchoring annular structures 4, each comprising at least one so-called bead core 5 preferably carrying an elastomeric filler 6 in radially outer position, are engaged with respective end flaps 3a of the carcass ply/plies 3. The anchoring annular structures 4 are integrated in proximity to zones normally identified with the name "beads", at which the engagement normally occurs between the tyre 2 and a respective mounting rim (not depicted).

A belt structure 7 can be circumferentially applied around the carcass ply/plies 3, and a tread band 8 is circumferentially superimposed in radially outer position with respect to the carcass ply/plies 3 and to the possible belt structure 7. Two sidewalls 9, each extended from the corresponding bead to a corresponding lateral edge of the tread band 8, are applied in laterally opposite positions on the carcass ply/plies 3.

The tread band 8 has a so-called "tread design" comprising a first series of ribs 10a and a second series of ribs 10b that are axially opposite, each extended transversely, preferably according to a direction that is oblique, with respect to the circumferential extension of the tread band 8 and alternatively intercalated with respective surface slots 11.

The ribs 10a, 10b respectively belonging to the first and second series are mutually offset in a circumferential direction and have respective axially inner apices 12 preferably arranged in proximity to an axial middle line plane M of the tyre 2. Preferably, the axially inner terminal portions of the ribs 10a, 10b respectively belonging to the first and to the second series are equidistant from the axial middle line plane M. More particularly, in the illustrated example, said axially inner apices 12 each terminate at or substantially at the axial middle line plane M.

From the axially inner apex of each rib, a main portion 13 is extended that leads to an axially outer apex 14, preferably arranged in proximity to the respective axially outer edge of the tread band 8.

Preferably, the main portion 13 has an extension that is tilted with respect to a circumferential direction, and the axially inner apex of each rib 10a, 10b is extended according to a direction that is angled with respect to the main portion 13.

The above-described tread design is formed during a moulding and vulcanisation treatment of the tyre 2 within the mould 1.

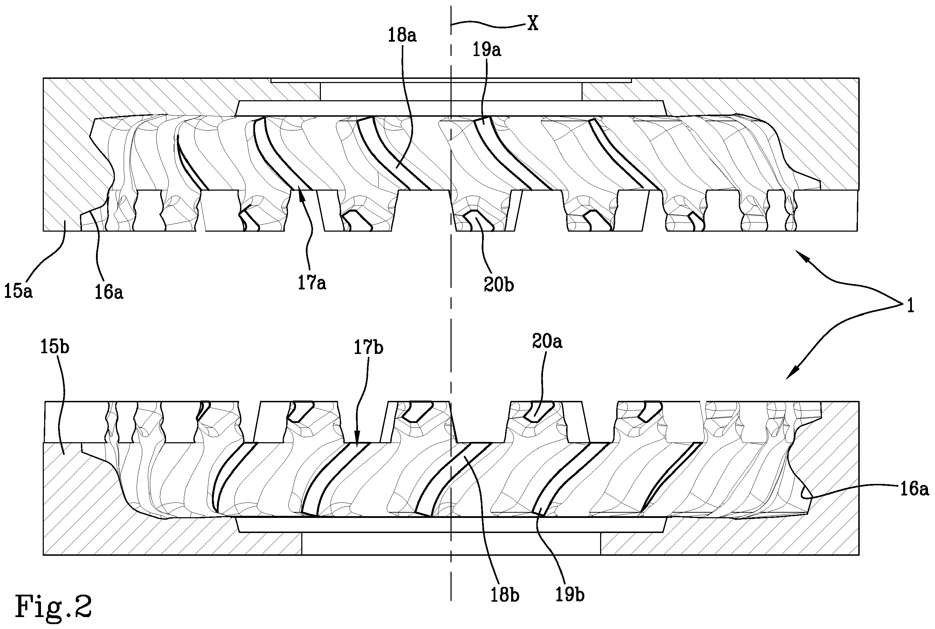

The mould 1 has a first half-part 15a and a second half-part 15b, axially opposite along a geometric centring axis X, which coincides with a geometric rotation axis of the tyre 2. The half-parts 15a, 15b are mutually side-by-side starting from an open condition, in which they are mutually spaced from each other as in figure 2, up to a closed condition in which the half-parts themselves mutually mate in order to define a moulding cavity 16 arranged to receive the tyre 2 being processed.

The green tyre 2, previously built in a known manner, is introduced between the half-parts 15a, 15b arranged in the open condition, and subsequently closed in the moulding cavity 16 following a mutual approach of the half-parts 15a, 15b. In a per se known manner, the tyre 2 closed in the moulding cavity 16 is subjected to a combined action of heating and pressing against an internal wall of the moulding cavity 16. The pressing determines the formation of the tread design and of possible graphic motifs and/or indications impressed for example in the zones of the sidewalls 9, while the administration of heat determines the molecular cross-linking of the elastomeric materials employed in the attainment of the tyre 2 and its consequent geometric and structural stabilisation.

The moulding cavity 16 reproduces, in reverse image, the shape of the tyre 2 with the tread design to be obtained, and therefore has an internal wall 16a extended concentrically around the geometric centring axis X and carrying a first and a second series of circumferentially-distributed slots 17a, 17b, each configured in order to define one of the aforesaid ribs 10a, 10b on the tread band 8 of the moulded tyre 2.

Each slot 17a, 17b has a main section 18a, 18b extended from an axially outer terminal portion 19a, 19b to an axially inner terminal portion 20a, 20b of the slot 17a, 17b itself. The main sections 18a, 18b of the slots 17a, 17b respectively belonging to the first and to the second series, and/or at least the axially outer terminal portions 19a, 19b of the same, are respectively situated in the first half-part 15a and in the second half-part 15b of the mould. The axially inner terminal portions 20a, 20b of the slots 17a, 17b belonging to the first and to the second series are in turn situated at or nearby an intermediate reference plane P orthogonal to the geometric centring axis X, while the axially outer terminal portions 19a, 19b are spaced therefrom. In the illustrated example, such intermediate reference plane P coincides with an axial middle line of the moulding cavity 16 and of the tyre 2 being processed, but in some embodiments it can be axially offset with respect to the axial middle line itself.

The slots 17a, 17b respectively belonging to the first and second series are circumferentially offset with respect to each other and have the respective axially inner terminal portions 20a, 20b equidistant from the intermediate reference plane P. More particularly, in the illustrated example, each of the axially inner terminal portions 20a, 20b terminates at the intermediate reference plane P, i.e. at zero or substantially zero distance therefrom.

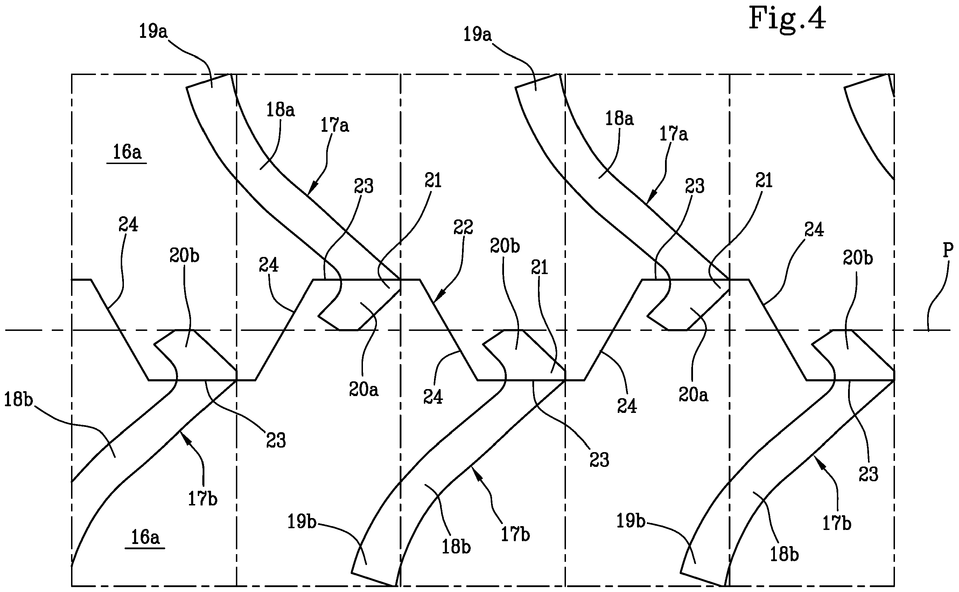

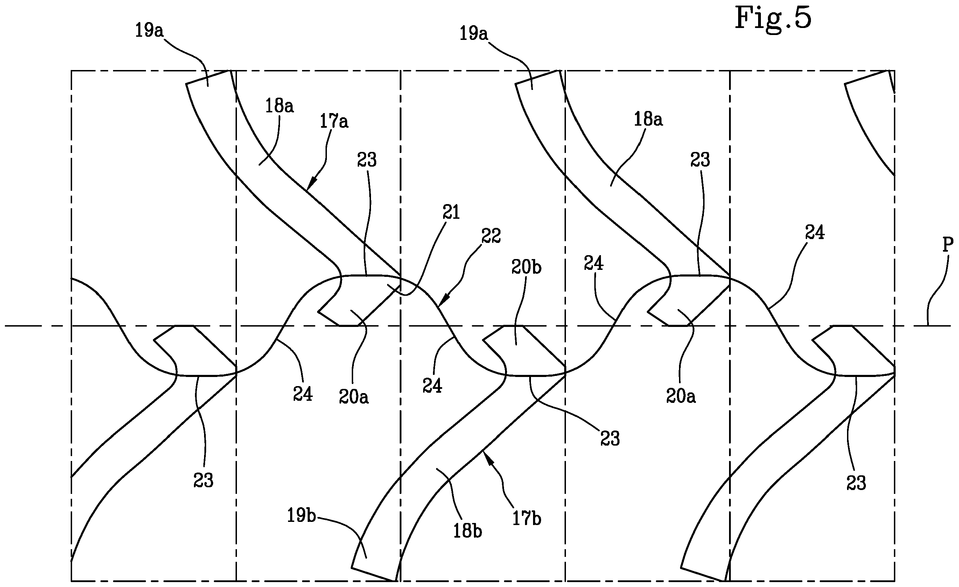

As is more visible in figures 4 and 5, the main section 18a, 18b of each slot 17a, 17b is extended obliquely with respect to the intermediate reference plane P, and it is joined with the respective axially inner terminal portion 20a, 20b according to a direction that is tilted with respect to the latter. The main section 18a, 18b and the respective axially inner terminal portion 20a, 20b therefore form a cusp 21a, 21b having a vertex directed according to a circumferential direction.

The half-parts 15a, 15b of the mould 1 coupled in the closed condition define a mutual junction line 22 which is extended circumferentially along the internal wall 16a of the moulding cavity 16. Such junction line 22, unlike known solutions in which it has a rectilinear progression along a circumferential direction, is extended advantageously according to an undulating progression astride the intermediate reference plane P.

More particularly, the junction line 22 forms crests 23 alternatively arranged on respectively opposite sides with respect to the intermediate reference plane P, consecutively interconnected by connection sections 24.

In the illustrated example, the crests 23 and the connection sections 24 of the junction line 22 each have a rectilinear extension and follow each other according to a polygonal chain progression. In at least one possible embodiment variant, the crests 23 and the connection sections 24 of the junction line 22 can also each have a curvilinear progression, and/or be mutually connected according to a sinusoidal progression.

Each of the connection sections 24 is extended on the continuation of two contiguous crests 23, traversing the intermediate reference plane P in a position comprised between two circumferentially adjacent slots 17a, 17b, respectively belonging to the first and second series. Each of the slots 17a, 17b belonging to the first and to the second series is in turn intersected by one of the crests 23 formed by the junction line 22. The intersection of each crest 23 with the respective slot 17a, 17b occurs in proximity to the axially inner terminal portion 20a, 20b of the slot itself, more precisely at the aforesaid cusp 21a, 21b formed in the transition between the main section 18a, 18b and the same axially inner terminal portion 20a, 20b. Preferably, the crests 23 formed by the junction line 22 are extended each along a bisector direction which symmetrically intersects the vertex of the respective cusp 21a, 21b, by dividing the latter between the first and the second half-part 15a, 15b of the mould 1.

Due to the undulated extension of the junction line 22, the axially inner terminal portions 20a, 20b of the slots 17a, 17b respectively belonging to the first and to the second series are respectively situated in the second half-part 15b and in the first half-part 15a. Consequently, the axially inner terminal portion 20a, 20b of each slot 17a, 17b is situated on the half-part (e.g. the first half-part 15a) of the mould 1 opposite the half-part (e.g. the second half-part 15b) carrying the main section 18a, 18b and the axially outer terminal portion 19a, 19b of the same slot 17a, 17b.

The undulated extension of the junction line 22 between the half-parts 15a, 15b of the mould 1 considerably simplifies the moving apart of the half-parts themselves during the opening of the mould 1, offering an improved distribution of the stresses transmitted to the various parts of the tyre 2 for the purpose of its removal from the moulding cavity 16. In particular, it was found that the positioning of each of the axially inner terminal portions 20a, 20b - in the half-part 15a, 15b opposite that which houses the remaining parts of the respective slot 17a, 17b - resolves the problems emerging in the prior art in relation to the opening of the mould 1. Indeed, when the tyre 2 is elastically deformed in order to allow the ribs 10a, 10b formed on the tread band 8 to exit from the slots 17a, 17b present in the internal wall 16a of the moulding cavity 16, the exit of the axially inner terminal appendices of the ribs 10a, 10b from the respective axially inner terminal portions 20a, 20b of the slots 17a, 17b occurs with relative ease and with a significant reduction of the stresses transmitted between the rigid parts of the mould 1 and the corresponding deformable parts of the tyre 2.

In particular, there is no excessive concentration of the stresses - which tends to be formed in the prior art at the cusps 21a, 21b formed in proximity to the axially inner terminal portions 20a, 20b. This is also ascribable to the fact that the orientation of the main sections 18a, 18b of the slots 17a, 17b, opposite that of the axially inner terminal portions 20a, 20b positioned in the opposite half-part, generates - during the opening of the mould 1 - force components that tend to rotate the tyre 2 around the geometric rotation axis thereof, facilitating the disengagement thereof from the slots 17a, 17b in a progressive manner and with an improved distribution of the stresses.

Thus, an advantageous reduction or elimination of the production defects is attained, also protecting the mould 1 and the mechanical components of the vulcanisation press from high stresses.

## Claims

1. Mould for vulcanising tyres for vehicles, comprising a first half-part (15a) and a second half-part (15b) that are axially opposite and mutually side-by-side along a geometric centring axis (X) in order to define a moulding cavity (16) arranged to house a tyre (2) being processed;
wherein the first half-part (15a) and the second half-part (15b) are mutually couplable along a junction line (22);
wherein the moulding cavity (16) has an internal wall (16a) extended concentrically around the geometric centring axis (X),
**characterized in that** the moulding cavity (16) carries a plurality of circumferentially-distributed slots (17a, 17b), configured for defining corresponding ribs (10a, 10b) on a radially outer portion of the moulded tyre (2);
wherein each slot (17a, 17b) has an axially inner terminal portion (20a, 20b) arranged in proximity to an intermediate reference plane (P) orthogonal to the geometric centring axis (X), and an axially outer terminal portion (19a, 19b) spaced from the intermediate reference plane (P);
wherein said plurality of slots (17a, 17b) comprises a first series of slots (17a, 17b) having the respective axially outer terminal portions (19a, 19b) in the first half-part (15a) and a second series of slots (17a, 17b) having the respective axially outer terminal portions (19a, 19b) in the second half-part (15b),
wherein the slots (17a, 17b) respectively belonging to the first and second series are circumferentially offset from each other and have the respective axially inner terminal portions (20a, 20b) equidistant from the intermediate reference plane (P);
wherein the junction line (22) is extended according to an undulating progression astride the intermediate reference plane (P), to form crests (23) alternatively arranged on respectively opposite sides with respect to the intermediate reference plane (P);
wherein each of the slots (17a, 17b) belonging to the first and to the second series is intersected in proximity to its axially inner terminal portion (20a, 20b) by one of the crests (23) formed by the junction line (22).

2. Mould according to claim 1, wherein the junction line (22) has connection sections (24), each of which extended on the continuation of two contiguous crests (23), traversing the intermediate reference plane (P) between two circumferentially adjacent slots (17a, 17b), respectively belonging to the first and second series.

3. Mould according to claim 1 or 2, wherein each slot (17a, 17b) has a main section (18a, 18b) extended from the axially outer terminal portion (19a, 19b) and joined with the axially inner terminal portion (20a, 20b), according to a direction that is tilted with respect to the latter.

4. Mould according to claim 3, wherein the main section (18a, 18b) and the axially inner terminal portion (20a, 20b) form a cusp (21a, 21b) having a vertex directed according to a circumferential direction.

5. Mould according to claim 4, wherein each crest (23) of the junction line (22) intersects the respective slot (17a, 17b) at the cusp (21a, 21b)

6. Mould according to claim 4 or 5, wherein the crest (23) of the junction line (22) is extended along a bisector direction which symmetrically intersects the vertex of the cusp (21a, 21b)

7. Mould according to one or more of claims 3 to 6, wherein the axially inner terminal portion (20a, 20b) of each slot (17a, 17b) is situated on the half-part of the mould (1) opposite the half-part carrying the main section (18a, 18b) and the axially outer terminal portion (19a, 19b) of the same slot (17a, 17b).

8. Mould according to one or more of claims 3 to 7, wherein the main section (18a, 18b) of each slot (17a, 17b) is extended obliquely with respect to the intermediate reference plane (P).

9. Mould according to one or more of claims 2 to 8, wherein the crests (23) and the connection sections (24) of the junction line (22) each have a rectilinear extension.

10. Mould according to one or more of claims 2 to 9, wherein the crests (23) and the connection sections (24) of the junction line (22) follow each other according to a polygonal chain progression.

11. Mould according to one or more of claims 2 to 8, wherein the crests (23) and/or the connection sections (24) of the junction line (22) each have a curvilinear progression.

12. Mould according to one or more of claims 2 to 11, wherein the crests (23) and the connection sections (24) of the junction line (22) are mutually connected according to a sinusoidal progression.

13. Mould according to one or more of the preceding claims, wherein the intermediate reference plane (P) coincides with an axial middle line of the moulding cavity (16).

## Patentansprüche

1. Form zum Vulkanisieren von Reifen für Fahrzeuge, umfassend einen ersten Halbteil (15a) und einen zweiten Halbteil (15b), die axial gegenüberliegend und gegenseitig Seite an Seite entlang einer geometrischen Zentrierachse (X) angeordnet sind, um einen Formungshohlraum (16) zu definieren, der ausgebildet ist, um einen Reifen (2) aufzunehmen, der verarbeitet wird;
wobei der erste Halbteil (15a) und der zweite Halbteil (15b) entlang einer Verbindungslinie (22) miteinander verbindbar sind;
wobei der Formungshohlraum (16) eine Innenwand (16a) aufweist, die sich konzentrisch um die geometrische Zentrierachse (X) erstreckt,
**dadurch gekennzeichnet, dass** der Formungshohlraum (16) mehrere umfänglich verteilte Schlitze (17a, 17b) trägt, die ausgelegt sind, um entsprechende Rippen (10a, 10b) auf einem radial äußeren Abschnitt des geformten Reifens (2) zu definieren;
wobei jeder Schlitz (17a, 17b) einen axial inneren Endabschnitt (20a, 20b), der in der Nähe einer Zwischenreferenzebene (P) orthogonal zu der geometrischen Zentrierachse (X) angeordnet ist, und einen axial äußeren Endabschnitt (19a, 19b) aufweist, der von der Zwischenreferenzebene (P) beabstandet ist; wobei die mehreren Schlitze (17a, 17b) eine erste Reihe von Schlitzen (17a, 17b) mit den jeweiligen axial äußeren Endabschnitten (19a, 19b) im ersten Halbteil (15a) und eine zweite Reihe von Schlitzen (17a, 17b) mit den jeweiligen axial äußeren Endabschnitten (19a, 19b) im zweiten Halbteil (15b) umfassen,
wobei die Schlitze (17a, 17b), die jeweils zur ersten Reihe und zur zweiten Reihe gehören, in Umfangsrichtung zueinander versetzt sind und die jeweiligen axial inneren Endabschnitte (20a, 20b) mit gleichem Abstand von der Zwischenreferenzebene (P) aufweisen;
wobei sich die Verbindungslinie (22) gemäß einem wellenförmigen Verlauf rittlings auf der Zwischenreferenzebene (P) erstreckt, um Kronen (23) zu bilden, die abwechselnd auf jeweils gegenüberliegenden Seiten in Bezug auf die Zwischenreferenzebene (P) angeordnet sind;
wobei jeder der Schlitze (17a, 17b), die zur ersten Reihe und zur zweiten Reihe gehören, in der Nähe seines axial inneren Endabschnitts (20a, 20b) von einer der Kronen (23), die durch die Verbindungslinie (22) gebildet sind, geschnitten wird.

2. Form nach Anspruch 1, wobei die Verbindungslinie (22) Verbindungsabschnitte (24) aufweist, von denen sich jeder auf der Fortsetzung von zwei angrenzenden Kronen (23) erstreckt, wobei sie die Zwischenreferenzebene (P) zwischen zwei in Umfangsrichtung benachbarten Schlitzen (17a, 17b) durchqueren, die jeweils zur ersten Reihe und zur zweiten Reihe gehören.

3. Form nach Anspruch 1 oder 2, wobei jeder Schlitz (17a, 17b) einen Hauptabschnitt (18a, 18b) aufweist, der sich vom axial äußeren Endabschnitt (19a, 19b) erstreckt und mit dem axial inneren Endabschnitt (20a, 20b) gemäß einer Richtung verbunden ist, die in Bezug auf Letzteren geneigt ist.

4. Form nach Anspruch 3, wobei der Hauptabschnitt (18a, 18b) und der axial innere Endabschnitt (20a, 20b) eine Spitze (21a, 21b) mit einem Scheitelpunkt bilden, der gemäß einer Umfangsrichtung ausgerichtet ist.

5. Form nach Anspruch 4, wobei jede Krone (23) der Verbindungslinie (22) den jeweiligen Schlitz (17a, 17b) an der Spitze (21a, 21b) schneidet.

6. Form nach Anspruch 4 oder 5, wobei sich die Krone (23) der Verbindungslinie (22) entlang einer Richtung der Winkelhalbierenden erstreckt, die den Scheitelpunkt der Spitze (21a, 21b) symmetrisch schneidet.

7. Form nach einem oder mehreren der Ansprüche 3 bis 6, wobei sich der axial innere Endabschnitt (20a, 20b) jedes Schlitzes (17a, 17b) auf dem Halbteil der Form (1) befindet, der dem Halbteil gegenüberliegt, der den Hauptabschnitt (18a, 18b) und den axial äußeren Endabschnitt (19a, 19b) desselben Schlitzes (17a, 17b) trägt.

8. Form nach einem oder mehreren der Ansprüche 3 bis 7, wobei sich der Hauptabschnitt (18a, 18b) jedes Schlitzes (17a, 17b) schräg in Bezug auf die Zwischenreferenzebene (P) erstreckt.

9. Form nach einem oder mehreren der Ansprüche 2 bis 8, wobei die Kronen (23) und die Verbindungsabschnitte (24) der Verbindungslinie (22) jeweils eine geradlinige Erstreckung aufweisen.

10. Form nach einem oder mehreren der Ansprüche 2 bis 9, wobei die Kronen (23) und die Verbindungsabschnitte (24) der Verbindungslinie (22) gemäß einem Verlauf einer polygonalen Kette aufeinander folgen.

11. Form nach einem oder mehreren der Ansprüche 2 bis 8, wobei die Kronen (23) und/oder die Verbindungsabschnitte (24) der Verbindungslinie (22) jeweils einen krummlinigen Verlauf aufweisen.

12. Form nach einem oder mehreren der Ansprüche 2 bis 11, wobei die Kronen (23) und die Verbindungsabschnitte (24) der Verbindungslinie (22) gemäß einem sinusförmigen Verlauf miteinander verbunden sind.

13. Form nach einem oder mehreren der vorhergehenden Ansprüche, wobei die Zwischenreferenzebene (P) mit einer axialen Mittellinie des Formungshohlraums (16) zusammenfällt.

## Revendications

1. Moule de vulcanisation de pneumatiques pour véhicules, comprenant une première demi-partie (15a) et une deuxième demi-partie (15b) étant axialement opposées et mutuellement côte à côte le long d'un axe de centrage géométrique (X) afin de définir une cavité de moulage (16) disposée pour loger un pneumatique (2) en cours de traitement ;
dans lequel la première demi-partie (15a) et la deuxième demi-partie (15b) peuvent mutuellement être couplées le long d'une ligne de jonction (22) ;
dans lequel la cavité de moulage (16) comporte une paroi interne (16a) étendue concentriquement autour de l'axe de centrage géométrique (X),
**caractérisé en ce que** la cavité de moulage (16) porte une pluralité de fentes réparties sur la circonférence (17a, 17b), configurées pour définir des nervures correspondantes (10a, 10b) sur une partie radialement extérieure du pneumatique moulé (2) ;
dans lequel chaque fente (17a, 17b) comporte une partie terminale axialement intérieure (20a, 20b) disposée à proximité d'un plan de référence intermédiaire (P) orthogonal à l'axe de centrage géométrique (X), et une partie terminale axialement extérieure (19a, 19b) espacée du plan de référence intermédiaire (P) ;
dans lequel ladite pluralité de fentes (17a, 17b) comprend une première série de fentes (17a, 17b) comportant les parties terminales axialement extérieures (19a, 19b) respectives dans la première demi-partie (15a) et une deuxième série de fentes (17a, 17b) comportant les parties terminales axialement extérieures (19a, 19b) respectives dans la deuxième demi-partie (15b),
dans lequel les fentes (17a, 17b), appartenant respectivement à la première et à la deuxième série, sont décalées sur la circonférence les unes par rapport aux autres et ont les parties terminales axialement intérieures (20a, 20b) respectives équidistantes du plan de référence intermédiaire (P) ;
dans lequel la ligne de jonction (22) est prolongée selon une progression ondulante à cheval sur le plan de référence intermédiaire (P), pour former des crêtes (23) disposées alternativement sur les côtés opposés par rapport au plan de référence intermédiaire (P) ;
dans lequel chacune des fentes (17a, 17b) appartenant à la première et à la deuxième série est coupée à proximité de sa partie terminale axialement intérieure (20a, 20b) par l'une des crêtes (23) formées par la ligne de jonction (22).

2. Moule selon la revendication 1, dans lequel la ligne de jonction (22) comporte des sections de raccordement (24), chacune d'elles prolongées dans la continuité de deux crêtes (23) contiguës, traversant le plan de référence intermédiaire (P) entre deux fentes adjacentes (17a, 17b) sur la circonférence, appartenant respectivement à la première et à la deuxième série.

3. Moule selon la revendication 1 ou 2, dans lequel chaque fente (17a, 17b) comporte une section principale (18a, 18b) prolongée à partir de la partie terminale axialement extérieure (19a, 19b) et reliée à la partie terminale axialement intérieure (20a, 20b), selon une direction étant inclinée par rapport à cette dernière.

4. Moule selon la revendication 3, dans lequel la section principale (18a, 18b) et la partie terminale axialement intérieure (20a, 20b) forment une cuspide (21a, 21b) ayant le sommet orienté selon une direction sur la circonférence.

5. Moule selon la revendication 4, dans lequel chaque crête (23) de la ligne de jonction (22) coupe la fente (17a, 17b) respective en correspondance de la cuspide (21a, 21b).

6. Moule selon la revendication 4 ou 5, dans lequel la crête (23) de la ligne de jonction (22) est prolongée le long d'une direction bissectrice qui coupe symétriquement le sommet de la cuspide (21a, 21b).

7. Moule selon une ou plusieurs des revendications 3 à 6, dans lequel la partie terminale axialement intérieure (20a, 20b) de chaque fente (17a, 17b) est située sur la demi-partie du moule (1) opposée à la demi-partie portant la section principale (18a, 18b) et la partie terminale axialement extérieure (19a, 19b) de la même fente (17a, 17b) .

8. Moule selon une ou plusieurs des revendications 3 à 7, dans lequel la section principale (18a, 18b) de chaque fente (17a, 17b) est prolongée obliquement par rapport au plan de référence intermédiaire (P).

9. Moule selon une ou plusieurs des revendications 2 à 8, dans lequel les crêtes (23) et les sections de raccordement (24) de la ligne de jonction (22) ont chacune une extension rectiligne.

10. Moule selon une ou plusieurs des revendications 2 à 9, dans lequel les crêtes (23) et les sections de raccordement (24) de la ligne de jonction (22) se suivent selon une progression en chaîne polygonale.

11. Moule selon une ou plusieurs des revendications 2 à 8, dans lequel les crêtes (23) et/ou les sections de raccordement (24) de la ligne de jonction (22) ont chacune une progression curviligne.

12. Moule selon une ou plusieurs des revendications 2 à 11, dans lequel les crêtes (23) et les sections de raccordement (24) de la ligne de jonction (22) sont mutuellement raccordées selon une progression sinusoïdale.

13. Moule selon une ou plusieurs des revendications précédentes, dans lequel le plan de référence intermédiaire (P) coïncide avec une ligne médiane axiale de la cavité de moulage (16).
